Europäisches Patentamt

(19) European Patent Office

Office européen des brevets

(11) Numéro de publication: **0 006 807**
**B1**

(12) **FASCICULE DE BREVET EUROPEEN**

(45) Date de publication du fascicule du brevet: **12.05.82**

(51) Int. Cl.³: **H 04 B 7/24**

(21) Numéro de dépôt: **79400409.3**

(22) Date de dépôt: **19.06.79**

(54) Dispositif de liaison hertzienne multiplexée.

(30) Priorité: **27.06.78 FR 7819109**

(43) Date de publication de la demande:
**09.01.80 Bulletin 80/1**

(45) Mention de la délivrance du brevet:
**12.05.82 Bulletin 82/19**

(84) Etats contractants désignés:
**BE DE GB IT**

(56) Documents cités:
**FR - A - 2 347 839**

**"GEC TELECOMMUNICATIONS", vol. 1, no 2, 1946 Coventry "Short Range Communications by VHF Radio", pages 61—71.
WESCON TECHNICAL PAPERS, vol. 15 1971, 24—27 août New York US—S. KAKIHANA: "Transistor for the ERA of Microwave Communication" pages 26/3—1—26/3—6.**

(73) Titulaire: **COMMISSARIAT A L'ENERGIE ATOMIQUE Etablissement de Caractère Scientifique Technique et Industriel
B.P. 510
F-75752 Paris Cedex 15 (FR)**

(72) Inventeur: **Andreucci, Pierre
46, rue de Longjumeau
F-91300 Massy (FR)**
Inventeur: **Moron, Jacques
18, rue de Longjumeau
F-91300 Massy (FR)**

(74) Mandataire: **Mongrédien, André et al,
c/o Brevatome 25, rue de Ponthieu
F-75008 Paris (FR)**

Dispositif de liaison hertzienne multiplexée

La présente invention a pour objet un dispositif de liaison hertzienne multiplexée. Elle trouve une application générale en télécommunications et une application particulière dans la réalisation de moyens de communication phonique entre plusieurs personnes éloignées les unes des autres, ou isolées les unes des autres par le fait qu'elles sont revêtues de combinaisons étanches, ce qui est le cas notamment des personnes travaillant en milieu hostile et, en particulier, dans des enceintes de décontamination d'objets et matières radioactifs.

Les opérateurs qui travaillent dans de telles enceintes sont équipés de vêtements ventilés qui les isolent entièrement du milieu ambiant. Ces conditions particulières de travail nécessitent, autant pour des raisons de sécurité que d'efficacité et de confort, l'emploi de moyens de communication entre les opérateurs et des personnes situées à l'extérieur de l'enceinte.

Les dispositifs de liaison par fils ne donnent en général pas satisfaction dans cette application, du fait des risques permanents de coupure des fils, et de la mauvaise qualité de la liaison.

On a donc recours dans l'art antérieur à un système de liaison sans fil, par onde hertzienne. Un tel système est composé d'un ensemble de postes émetteur-récepteur, chaque opérateur ayant à sa disposition un tel poste, dit par la suite poste-opérateur, et la personne située à l'extérieur de l'enceinte disposant d'un autre poste dit par la suite poste-directeur. Dans des systèmes perfectionnés, chacune des voies de communication établie entre un poste-opérateur et le poste-directeur peut s'effectuer sur une fréquence particulière, afin d'eviter les interférences entre messages émanant de plusieurs opérateurs. On obtient alors un système multiplexé en fréquence. Cela nécessite naturellement que le poste-directeur soit équipé d'autant de récepteurs qu'il y a de postes-opérateurs, chacun desdits récepteurs travaillant sur une fréquence particulière; le poste-directeur peut être équipé d'autant d'émetteurs qu'il y a de postes-opérateurs mais on peut aussi n'utiliser qu'un seul émetteur, les récepteurs des postes-opérateurs étant alors tous identiques.

L'inconvénient d'un tel système est évident: si les opérateurs peuvent converser avec le directeur des travaux situé à l'extérieur de l'enceinte de décontamination, ils ne peuvent converser entre eux. Si l'on veut donner aux opérateurs une telle faculté, il faut doubler les équipements de chaque opérateur en leur adjoignant un ensemble émetteur-récepteur apte à établir la communication d'un opérateur à l'autre.

L'invention a justement pour objet un dispositif du type décrit, mais qui donne en plus aux opérateurs cette possibilité de communiquer entre eûx sane qu'il soit besoin d'adjoindre des moyens supplémentaires aux postes-opérateurs. De plus, le dispositif de l'invention ñe nécessite de la part desdits opérateurs aucune manipulation d'organes commûtateurs, notamment lors des passages entre une phase de réception et une phase d'émission.

Ce but est atteint, selon l'invention, par l'utilisation de moyens disposés dans le poste directeur et aptes à réinjecter dans l'émetteur de ce poste les signaux de basse-fréquence delivrés par les récepteurs dudit poste. Ainsi, par ces moyens, les messages peuvent circuler d'un opérateur à l'autre en transitant par le poste-directeur.

De façon plus précise, la présente invention a pour objet un dispositif de liaison hertzienne multiplexée en fréquence, entre un poste-directeur et au moins deux postes opérateurs, ce dispositif étant du genre de ceux dans lesquels le poste-directeur comprend, d'une part, un émetteur recevant d'un microphone un signal à basse fréquence et émettant une onde à haute fréquence Fe et, d'autre part, autant de récepteurs qu'il y a de postes-opérateurs, chaque récepteur étant calé sur une haute fréquence particulière Fi différente de Fe, chaque récepteur délivrant un signal à basse fréquence qui est dirigé vers un haut-parleur, et dans lequel chaque poste-opérateur comprend, d'une part, un récepteur calé sur ladite fréquence Fe et alimentant un haut-parleur et, d'autre part, un émetteur relié à un microphone et fonctionnant sur l'une desdites fréquences Fi, caractérisé en ce que le poste-directeur comprend un émetteur constitué d'un étage de préamplification à basse fréquence relié au microphone puis des moyens de modulation et d'amplification reliés à une antenne et en ce qu'il comprend en outre des moyens pour prélever une partie des signaux de basse fréquence délivrés par chacun des récepteurs de ce poste-directeur et réinjecter ces signaux après l'étage de préamplification et avant des moyens de modulation et d'amplification.

De toute façon, les caractéristiques et avantages de l'invention apparaîtront mieux après la description qui suit, d'exemples de réalisation donnés à titre explicatif et nullement limitatif. Cette description se réfère à des dessins sur lesquels:

—la figure 1 représente un schéma synoptique d'un dispositif selon l'invention;
—la figure 2 représente le schéma synoptique d'un émetteur utilisable dans le dispositif de l'invention;
—la figure 3 représente le schéma synoptique d'un circuit récepteur utilisable dans le dispositif de l'invention.

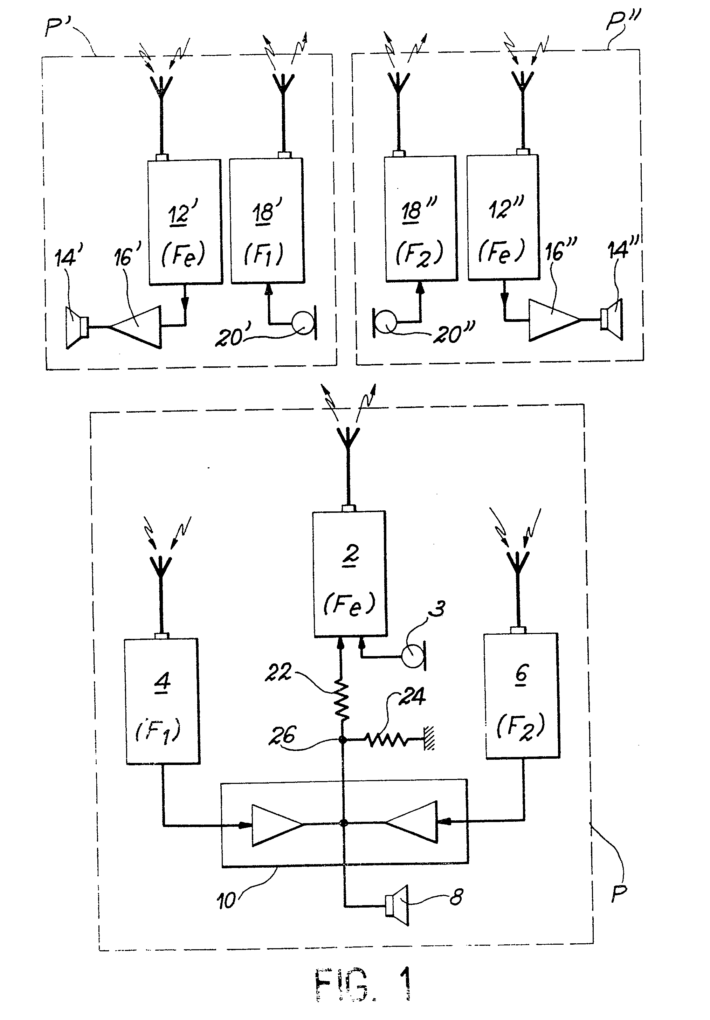

Bien que l'invention s'applique au cas général où l'on désire établir une liaison entre un poste-directeur et un nombre quelconque (supérieur à deux) de postes-opérateurs, la figure 1 se réfère à titre explicatif au cas particulier où le nombre de ces postes-opérateurs est égal à deux.

Sur cette figure, le dispositif représenté comprend deux postes-opérateurs P' et P'' et un poste-directeur P. Ce dernier comprend, d'une part, un émetteur 2 qui reçoit d'une microphone 3 un signal à basse fréquence et qui émet une onde à haute fréquence Fe et, d'autre part, deux récepteurs 4 et 6 calés respectivement sur des hautes fréquences $F_1$ et $F_2$ différentes de Fe et délivrant chacun un signal a basse fréquence dirigé vers un haut-parleur 8 à travers un circuit amplificateur 10.

Chaque poste-opérateur P' et P'' comprend, d'une part, un récepteur 12' (12'') calé sur la fréquence Fe et alimentant un haut-parleur 14' (14'') par l'intermédiaire d'un amplificateur 16' (16'') et, d'autre part, un émetteur 18' (18'') relié à un microphone 20' (20''); les émetteurs 18' et 18'' fonctionnent respectivement sur les fréquences $F_1$ et $F_2$.

Le dispositif représenté comprend en outre, et selon l'invention, des moyens situés dans le poste-directeur P pour réinjecter une partie des signaux à basse fréquence délivrés par chacun des récepteurs 4 et 6 du poste-directeur dans l'émetteur 2 de ce poste. Dans le mode de réalisation illustre, ces moyens sont constitués par un pont résistif formé par deux résistances 22 et 24 dont le point milieu 26 est relié au circuit amplificateur basse fréquence 10.

Le fonctionnement de ce dispositif est le suivant. Chaque opérateur disposant d'un poste P' ou P'' peut établir une liaison phonique avec la personne disposant du poste-directeur P. Les moyens mis en jeu dans une telle liaison sont, à l'aller: l'émetteur 18' (ou 18'') fonctionnant sur la fréquence $F_1$ (ou $F_2$), le récepteur 4 (fréquence $F_1$) ou le récepteur 6 (fréquence $F_2$); et au retour: l'émetteur 2 du poste-directeur P et le récepteur 12' (ou 12'').

Le communication entre deux opérateurs disposant respectivement des postes P' et P'' s'effectue par le canal du poste-directeur P grâce à la réinjection dans l'émetteur 2 des signaux basse fréquence délivrés par les deux récepteurs 4 et 6. La liaison entre l'opérateur disposant du poste P' et l'opérateur disposant du poste P'' emprunte ainsi, à l'aller: l'émetteur 18', le récepteur 4, l'émetteur 2 et le récepteur 12'' et au retour: l'émetteur 18'', le récepteur 6, l'émetteur 2 et le récepteur 12'.

On observera que cette communication entre opérateurs est établie en permanence, sans qu'il y ait lieu pour ceux-ci de manoeuvrer des organes de commutation, et que le poste-directeur est toujours maître des communications, même s'il n'intervient pas directement dans celles-ci, car il n'est jamais isolé des postes opérateurs.

Bien que tout circuit émetteur ou récepteur puisse convenir dans le dispositif de l'invention, deux modes particuliers de réalisation de ces circuits vont maintenant être décrits et cela à titre explicatif.

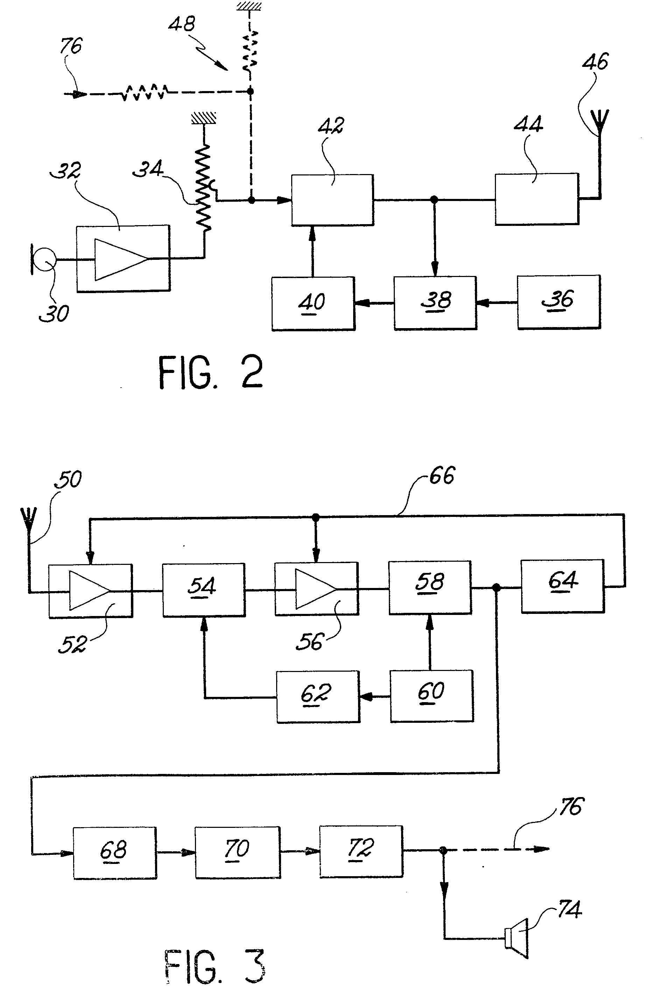

La figure 2, tout d'abord, illustre le schéma synoptique d'un circuit émetteur. Un tel circuit comprend, connecté à un microphone 30, un amplificateur basse fréquence 32, un potentiomètre 34, un oscillateur 36 piloté par quartz, un mélangeur de fréquence 38, suivi d'un discriminateur de fréquence 40, relié à un oscillateur 42 modulé en fréquence et enfin un amplificateur haute fréquence 44 couplé à une antenne 46. Si cet émetteur est incorporé dans le poste-directeur, il comprend en outre un pont résistif 48 dont l'entrée est reliée au récepteur dudit poste par la connexion 76 afin que les signaux basse fréquence délivrés par ces récepteurs soient réinjectés avec le signal basse fréquence délivré par l'amplificateur 32 dans le circuit 42 appartenant à l'étage d'émission.

A titre explicatif, le demandeur a utilisé avec succès des émetteurs de la marque "MELODIUM", de type EC 23, dont les caractéristiques principales sont les suivantes:

— fréquences: 36,4 MHz—32,8 MHZ—39,2 MHz;
— type de modulation: modulation de fréquence;
— puissance rayonnée par l'antenne: 1 mW;
— excursion de fréquence nominale: ±50 kHz;
— pré-accentuation: 50 $\mu s$;
— courbe de réponse basse fréquence: 20 Hz à 20 kHz±2db par rapport à la courbe de pré-accentuation;
— sensibilité à l kHz: 0,6 mV pour une excursion de ±50 kHz;
— niveau de modulation: 20 db;
— rapport signal sur bruit supérieur à 50db pour 0,6 mV à l'entrée;
— consommation: environ 15 mA.

En ce qui concerne les récepteurs, un schéma synoptique possible est donné par la figure 3. Le circuit illustré comprend, après une antenne 50, un amplificateur haute fréquence 52, un premier mélangeur de fréquence 54, suivi d'un amplificateur de fréquence intermédiaire 56, lui-même suivi d'un second circuit mélangeur de fréquence 58, lequel reçoit, d'un oscillateur local 60 piloté par quartz, un signal qui est également appliqué à un circuit multiplicateur de fréquence 62, dont la sortie est appliquée au premier circuit mélangeur 54. Un circuit de détection d'amplitude 64 permet d'alimenter une boucle 66 de contrôle automatique de gain. Le circuit se complète par un amplificateur moyenne fréquence et limiteur 68 relié à un circuit 70 de discrimination et de désaccentuation, relié à un amplificateur basse fréquence 72 qui commande un haut-parleur 74.

Si le circuit récepteur illustré constitue l'un des récepteurs du poste-directeur, une connexion 76 est prévue apres le circuit 72 d'amplification basse fréquence, pour permettre la réinjection d'une partie du signal basse fréquence dans le circuit d'émission, connexion 76 que l'on retrouve sur le schéme de la figure 2, comme indiqué plus haut.

A titre explicatif, le demandeur a utilisé avec succès un récepteur de la marque "MELODIUM" dont les caractéristiques principales sont les suivantes:

— impédance d'entrée: 50Ω;
— sensibilité: f.e.m=1,5μV pour un rapport signal sur bruit de 26db, une excursion de fréquence de ±50 kHz et une fréquence de modulation de 1 kHz;
— rapport signal sur bruit: supérieur à 40 db pour une force électromagnétique de 3 μV; supérieur à 55 db pour une f.e.m. de 20 μV;
— une protection contre la modulation d'amplitude: supérieure à 40 db pour une f.e.m. d'antenne comprise entre 10 μV et 200 mV en porteuse, une fréquence de modulation de 500 Hz, une profondeur de 50%.
— protection contre la première fréquence image à 800 kHz: supérieure à 30 db;
— protection contre un brouilleur espacé à plus de 1,5 MHz: supérieure à 50 db;
— variation du niveau basse fréquence en sortie: inférieure à 0,5 db pour un signal d'antenne compris entre 3 μV et 200 mV;
— tolérance sur la fréquence d'émission: ±100 kHz pour un signal d'antenne compris entre 20 μV et 200 mV;
— consommation: environ 18 mA.

Parmi les fréquences possibles, on peut utiliser celles qui sont autorisées en France par l'Administration des Postes et Télécommunications, à savoir les fréquences 32,8 MHz—36,4 MHz et 39,2 MHz. L'émetteur du poste-directeur est alors calé par exemple sur 32,8 MHz, les deux récepteurs des postes secondaires étant eux aussi calés sur ces fréquences, l'un des émetteurs des postes secondaires est calé sur 36,4 MHz et le second sur 39,2 MHz. Les deux récepteurs du poste-directeur sont alore calés respectivement sur les fréquences 36,4 et 39,2 MHz.

## Revendications

1. Dispositif de liaison hertzienne multiplexée en fréquence, entre un poste-directeur (P) et au moins deux postes-opérateurs (P', P''), ce dispositif étant du genre de ceux dans lesquels le poste-directeur (P) comprend, d'une part, un émetteur (2) recevant d'un microphone (3) un signal à basse fréquence et émettant une onde à haute fréquence Fe et, d'autre part autant de récepteurs (4, 6) qu'il y a de postes-opérateurs, (P', P''), chaque récepteur étant calé sur une haute fréquence particulière Fi (F₁, F₂) différente de Fe et délivrant un signal à basse fréquence dirigé vers un haut parleur (8) et dans lequel chaque poste-opérateur (P', P'') comprend, d'une part un récepteur (12', 12'') calé sur ladite fréquence Fe et alimentant un haut-parleur (14', 14'') et, d'autre part, un émetteur (18', 18'') relié à un microphone (20', 20'') et fonctionnant sur l'une desdites fréquences Fi, caractérisé en ce que le poste-directeur (P) comprend un émetteur (2) constitué d'un étage (32) de préamplification à basse fréquence relié au microphone (30), puis des moyens de modulation (42) et d'amplification (44) reliés à une antenne (46) et en ce qu'il comprend en outre des moyens (22, 24, 26) pour prélever une partie des signaux de basse fréquence délivrés par chacun des récepteurs (4, 6) de ce poste-directeur et réinjecter ces signaux après l'étage de préamplification (32) et avant les moyens (42, 44) de modulation et d-amplification.

2. Dispositif selon la revendication 1, caractérisé en ce que l'étage de préamplification (32) se termine par un potentionmètre de réglage (34) et en ce que les moyens pour réinjecter les signaux à basse fréquence consistent en un pont résistif diviseur (48) connecté à la sortie dudit potentiomètre.

3. Dispositif selon l'une des revendications 1 et 2, caractérisé en ce qu'il comprend un poste-directeur et deux postes-opérateurs, les trois fréquences d'émission de ces trois postes étant choisies parmi les trois fréquences 36,4 MHz, 32,8 MHz et 39,2 MHz.

## Claims

1. Arrangement for multiple-frequency Herzian communication between a director unit (P) and at least two operator units (P', P''), said arrangement being of the type in which the director unit (P) comprises on one hand, a transmitter (2) receiving a low-frequency signal from microphone (3) and emitting a high-frequency wave Fe and, on the other hand, as many receivers (4, 6) as there are operator units (P', P''), each receiver being set to a respective high frequency Fi (F₁, F₂) different from Fe and delivering a low-frequency signal to a loudspeaker (8), and in which each operator unit (P', P'') comprises, on the one hand, a receiver (12', 12'') set to the said frequency Fe and supplying a loudspeaker (14', 14''), and on the other hand, a transmitter (18', 18'') connected to a microphone (20', 20'') and functioning on one of the said frequencies Fi, characterized in that the director unit (P) comprises a transmitter (2) having a low-frequency preamplifier stage (32) connected to microphone (30), and modulation means (42) and amplifier means (44) connected to antenna (46) and in that it additionally comprises means (22, 24, 26) to divert a portion of the low-frequency signal delivered by each of the receivers (4, 6) of the director unit, and to reinject these signals after the preamplifier stage (32) and before the modulation and amplifier means (42, 44).

2. Arrangement according to Claim 1 characterized in that the preamplifier stage (32) terminates in an adjusting potentiometer (34) and in that the means to reinject the low-frequency signals comprises a dividing resistance bridge (48) connected to the output of said potentiometer.

3. Arrangement according to one of Claims 1 and 2 characterized in that it comprises one director unit and two operator units, the three transmission frequencies of the three units being selected from the three frequencies 36.4 MHz, 32.8 MHz and 39.2 MHz.

**Patentansprüche**

1. Anordnung für eine frequenzmultiplexierte Funkübertragung zwischan einer Leiterstelle (P) und mindestens zwei Operatorstellen (P', P''), wobei die Leiterstelle (P) einerseits einen Sender (2), welcher von einem Mikrophon (3) ein niederfrequentes Signal empfängt und eine Welle hoher Frequenz Fe ausstrahlt, und andererseits soviele Empfänger (4, 6) aufweist, wie Operatorstellen (P', P'') vorhanden sind, welche Empfänger (4, 6) jeweils auf eine besondere, von Fe verschiedene, hohe Frequenz Fi ($F_1$, $F_2$) eingestellt sind und ein niederfrequentes Signal für einen Lautsprecher (8) liefern, und wobei jede Operatorstelle (P', P'') einerseits einen Empfänger (12', 12''), welcher auf die Frequenz Fe eingestellt ist und einen Lautsprecher (14', 14'') speist, und andererseits einen an ein Mikrophon (20', 20'') angeschlossenen und auf einer der Frequenzen Fi arbeitenden Sender (18', 18'') aufweist, dadurch gekennzeichnet, daß die Leiterstelle (P) einen Sender (2) aufweist, welcher aus einer an das Mikrophon (30) angeschlossenen Niederfrequenzvorverstärkungsstufe (32), dann aus Modulations- und Verstärkungsmitteln (42 bzw. 44) besteht, welche an eine Antenne (46) angeschlossen sind, und daß sie weiterhin Mittel (22, 24, 26) zur Entnahme eines Teils der von jedem der Empfänger (4, 6) dieser Leiterstelle gelieferten niederfrequenten Signale und zum Wiedereinspeisen dieser Signale nach der Vorverstärkungsstufe (32) und vor den Modulations- und Verstärkungsmitteln (42 bzw. 44) aufweist.

2. Anordnung nach Anspruch 1, dadurch gekennzeichnet, daß die Vorverstärkungsstufe (32) mit einem Einstellpotentiometer (34) endet, und daß die Mittel zum Wiedereinspeisen der niederfrequenten Signale aus einer an den Ausgang des Potentiometers angeschlossenen, teilenden Widerstandsbrücke (48) bestehen.

3. Anordnung nach einem der Ansprüche 1 und 2, dadurch gekennzeichnet, daß eine Leiterstelle und zwei Operatorstellen vorgesehen sind, wobei die drei Sendefrequenzen dieser drei Stellen aus den drei Frequenzen 36,4 MHz, 32,8 MHz un 39,2 MHz ausgewählt sind.

FIG. 1

FIG. 2

FIG. 3